# EUROPEAN PATENT APPLICATION

(11) **EP 3 106 992 A1**
(43) Date of publication of application: **21.12.2016**
(21) Application number: 16172821.7
(22) Date of filing: 03.06.2016
(51) Int. Cl.: G06F 12/0804, G06F 12/0862, G06F 12/0868, G06F 12/0871

(54) **APPARATUS AND METHOD FOR PERFORMING CACHE MANAGEMENT IN A STORAGE SYSTEM**

(30) Priority: 18.06.2015 TW 104119728
(71) Applicant: Synology Incorporated, Taipei 103 (TW)
(72) Inventor: Lin, Yi-Chun, Tainan City 702 (TW); Liang, Chih-Cheng, Taichung City 420 (TW); Wang, Yu-Ting, New Taipei City 220 (TW); Chen, Hsuan-Ting, Taipei City 105 (TW)
(74) Representative: Becker Kurig Straus

(57) **Abstract**

A method (300) for performing cache management for a storage system (100) and an associated apparatus are provided, where the storage system (100) includes a plurality of storage devices. The method (300) includes: utilizing a storage device (120-1) of the plurality of storage devices as a cache (122) of another storage device of the plurality of storage devices, in which an access speed of the storage device is higher than that of the other storage device, and the cache (122) includes a plurality of cache blocks; and when a read miss of the cache (122) occurs, reading data corresponding to at least one cache block from the other storage device to store the data into the cache (122), in which a data amount corresponding to the read miss is less than a data amount of each cache block of the plurality of cache blocks.

## Description

The present invention relates to efficiency management of a data storage system, and more particularly, to a method and an associated apparatus for performing cache management in a storage system.

A storage system may adopt a cache operation mechanism to improve the read-write efficiency thereof. The cache operation mechanism may encounter some issues, however. The cache block size adopted by a cache operation mechanism equals the access unit of a block device in the storage system. For recording the block device position corresponding to each cache block, the cache operation mechanism needs a large amount of memory resources. Taking the EXT4 file system as an example, the smallest unit of the access request of the EXT4 file system is 4096 bits. Under the situation that the cache operation mechanism adopts 4KB as the size of each cache block and the storage capacity of the block device is usually much larger than 4KB, the total memory amount for recording the block device position corresponding to each cache block will be very large.

Although there are related art solutions which provide a scheme to reduce the usage of the memory by increasing the cache block amount, some side effects are introduced. For example, when dealing with the access request regarding the cache block size, the cache operation mechanism usually bypasses the cache and directly access the hard drive. This causes most of the accesses to not be cached, making cache operation mechanisms operate ineffectively, lowering the efficiency of the cache. When yet another cache operation mechanism deals with the access request regarding the cache block size, it copies the data of the access request to the cache block, and uses a structure to record the position the data is located on the cache block. Cache cavities may typically exist in the cache block, which affect the read/write operations. In the EXT4 file system, for instance, the data is not successive meaning there will be many cache cavities in the cache block after a period of random accessing. Further, the effective data in the cache is reduced, so that most access requests have to be read from the block device, which lowers the efficiency. In another example, when the cache operation mechanism attempts to read data in a specific block of the block device, even though the block already corresponds to a specific cache block in the cache, the data to be read is not in the cache. The cache operation mechanism still has to read data from the block device, which wastes the capacity and lowers the efficiency of the cache.

In view of the above, there is a need for a novel method and an associated scheme to properly solve the existing problem without introducing undesirable side effects.

This in mind, the application aims at providing a method and an apparatus in order to solve the abovementioned problems.

This is achieved by a method for performing cache management and associated device according to claims 1 and 8. The dependent claims pertain to corresponding further developments and improvements.

As will be seen more clearly from the detailed description following below, the claimed method includes: utilizing a storage device (e.g. a first storage device) of the plurality of storage devices as a cache of another storage device (e.g. a second storage device) of the plurality of storage devices, in which an access speed of the storage device is higher than that of the other storage device, and the cache includes a plurality of cache blocks; and when a read miss of the cache occurs, reading data corresponding to at least one cache block from the other storage device, to store the data into the cache, in which a data amount corresponding to the read miss is less than a data amount of each cache block of the plurality of cache blocks.

In addition, the claimed apparatus includes at least a portion (e.g. part or all) of the storage system. The storage system includes a plurality of storage devices. Further, the apparatus includes a storage device (e.g. a first storage device) of the plurality of storage devices and a control circuit. The storage device of the plurality of storage devices is arranged to store information, wherein an access speed of the storage device is higher than an access speed of another storage device (e.g. a second storage device) of the plurality of storage devices. The control circuit is configured in the storage system and coupled to the plurality of storage devices, the control circuit arranged to control operations of the storage system and utilizing the storage device as a cache of the other storage device, wherein the cache includes a plurality of cache blocks, and when a read miss of the cache occurs, the control circuit reads data corresponding to at least one cache block from the other storage device, to store the data into the cache, in which a data amount corresponding to the read miss is less than a data amount of each cache block of the plurality of cache blocks.

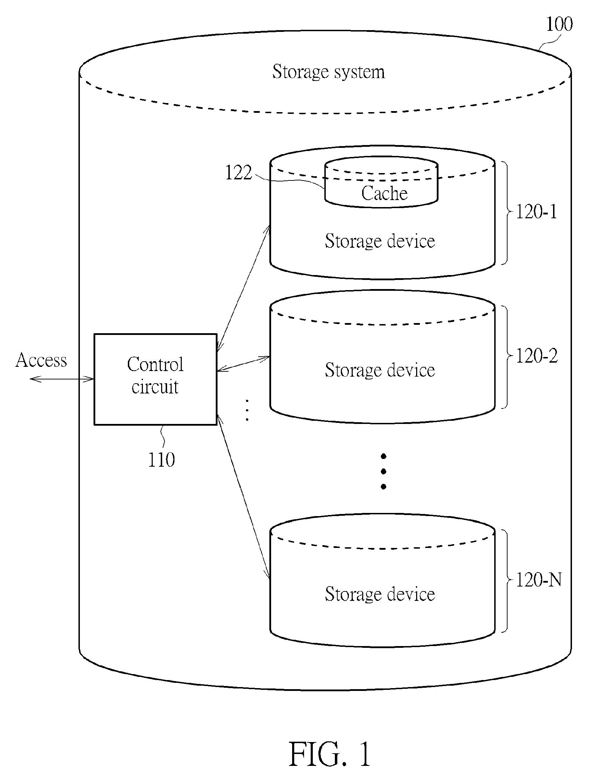

In the following, the invention is further illustrated by way of example, taking reference to the accompanying drawings. Thereof: Fig. 1 is a diagram illustrating a storage system according to an embodiment of the present invention;
Fig. 2 is a diagram illustrating implementation details of the storage system shown in Fig. 1 according to an embodiment of the present invention;
Fig. 3 is a flowchart illustrating a method for performing cache management in a storage system according to an embodiment of the present invention;
Fig. 4 is a diagram illustrating a target reading data related to the method shown in Fig. 3 according to an embodiment of the present invention;
Fig. 5 is a diagram illustrating a control scheme when the method of Fig. 3 is applied to the embodiment of Fig. 4;
Fig. 6 is a diagram illustrating an operation flow related to the method shown in Fig. 3 according to an embodiment of the present invention;
Fig. 7 is a diagram illustrating an operation flow related to the method shown in Fig. 3 according to another embodiment of the present invention;
Fig. 8 is a diagram illustrating the target writing data related to the method shown in Fig. 3 according to an embodiment of the present invention; and
Fig. 9 is a diagram illustrating a control scheme when the method of Fig. 3 is applied to the embodiment of Fig. 8.

Fig. 1 is a diagram illustrating a storage system 100 according to an embodiment of the present invention. The storage system 100 may include a control circuit 110 and a plurality of storage devices, such as N storage devices {120-1, 120-2, ..., 120-N}, in which the control circuit 110 is coupled to the plurality of storage devices, and N is a positive integer larger than 1. For example, when N = 2, the plurality of storage devices may include two storage devices 120-1 and 120-2. When N > 2, the plurality of storage devices may include three or more storage devices, such as storage devices 120-1, 120-2, ..., 120-N. In an example, any storage device (e.g. a storage device 120-n, in which n is a positive integer within [1,N]) of the N storage devices {120-1, 120-2, ..., 120-N} may include (but is not limited to) a solid state drive (SSD) and a hard disk drive (HDD).

According to this embodiment, the control circuit 110 is arranged to control the operations of the storage system 100. Each storage device of the N storage devices {120-1, 120-2, ..., 120-N} may be used to store information. Further, the control circuit 110 may use at least a portion (e.g. part or all) of a specific storage device within the N storage devices {120-1, 120-2, ..., 120-N} as a cache of another storage device. For example, the control circuit 110 may utilize the storage device 120-1 to implement the cache 122.

In practice, any of the N storage devices {120-1, 120-2, ..., 120-N} (e.g. the storage device 120-n) may be a physical storage device, or a logic storage device composed of multiple physical storage devices. More particularly, under the situation that any of the N storage devices {120-1, 120-2, ..., 120-N} (e.g. the storage device 120-n) represents a logic storage device composed of multiple physical storage devices, each of the N storage devices {120-1, 120-2, ..., 120-N} may be a redundant array of independent disks (RAID). For example, the storage device 120-1 may be a RAID composed of multiple SSDs for implementing the cache 122. A specific storage device of other storage devices {120-2, ..., 120-N} may be a RAID composed of multiple HDDs for storing data (e.g. the data, files or user data in the file system). Further, the control circuit 110 may be implemented as a processing circuit executing a program module. For example, the program module may include a firmware code. This is for illustrative purposes, and not meant to be a limitation of the present invention. For example, the program module may include a software code.

In some embodiments, an apparatus for performing cache management in the storage system 100 may include at least a portion (e.g. part or all) of the storage system 100. For example, this apparatus may include a portion of the storage system 100, such as the control circuit 110. This apparatus may include a portion of the storage system 100, such as the control circuit 110 and at least one (e.g. one or more) storage device of the N storage devices {120-1, 120-2, ..., 120-N}. This apparatus may include a portion of the storage system 100, such as the control circuit 110, and the cache 122 configured in the storage device 120-1. This apparatus may include the whole storage system 100. An embodiment of the storage system 100 may include (but is not limited to): a server and a network attached storage (NAS).

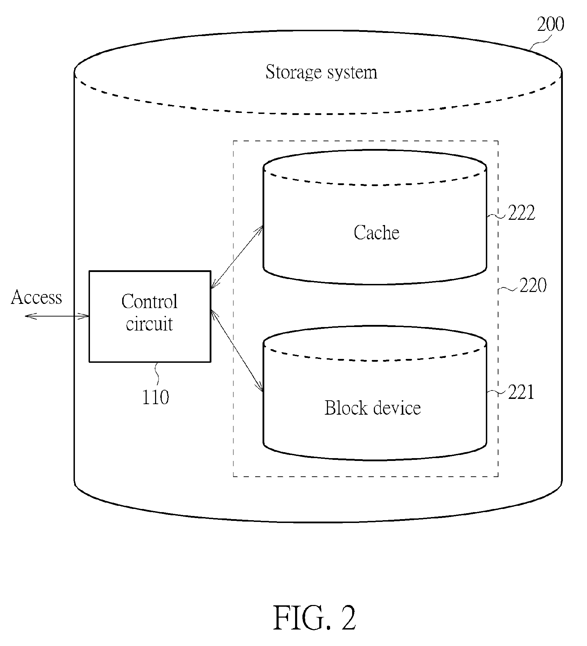

Fig. 2 is a diagram illustrating implementation details of the storage system 100 shown in Fig. 1 according to an embodiment of the present invention. In this embodiment, the size of the aforementioned cache 122 may be expanded to the whole storage device 120-1, and the access speed of the storage device 120-1 may be higher than the access speed of any other storage device of the N storage devices {120-1, 120-2, ..., 120-N}. For example, the storage device 120-1 may be an SSD, and the other storage device may be a block device 221, such as an HDD. Considering the above structural differences, the cache 122 and the storage system 100 are renamed as the cache 222 and the storage system 200 in this embodiment.

According to this embodiment, the block device 221 may be used to store the user data, and the cache 222 may be used to store a copy of a portion of block device data (e.g. a portion of the user data). The data stored in the cache 222 can be changed with the type of cache 222. For example, under the control of the control circuit 110, the cache 222 may be a read-only cache. Under the control of the control circuit 110, the cache 222 may be a read-write cache. No matter whether the cache 222 is a read-only cache or a read-write cache, the data management unit of the cache 222 may be called a "cache block". In practice, each cache block in the cache 222 corresponds to a section of the block device 221, in which the relationship between different cache blocks does not have to comprise successive data. The control circuit 110 may configure a section of memory to record the relation between the cache block and the block groups in the block device 221 for performing the cache management operation.

Under the situation that the cache 222 is a read-only cache, the contents stored in the cache 222 may be recently-read data. When receiving a read command or a read request, the control circuit 110 will check whether the data to be read exists in the cache 222. If there is a cache hit, the control circuit 110 directly obtains the data from the cache 222 and sends back the data; otherwise, the control circuit 110 reads data from the block device 221 and stores a copy in the cache 222 for follow-up readings. Further, when the cache 222 is in a read-write state, the contents stored in the cache 222 may be recently read/written data. In addition to the read control mechanism in which the operations are the same as the above example of the read-only cache, the control circuit is further equipped with a write control mechanism. When receiving a new write command or a write request, the control circuit 110 will write the cache 222, and then write the data in the cache 222 into the block device 221 when a specific condition is confirmed (e.g. the storage system 200 is idle, or the cache 222 is full).

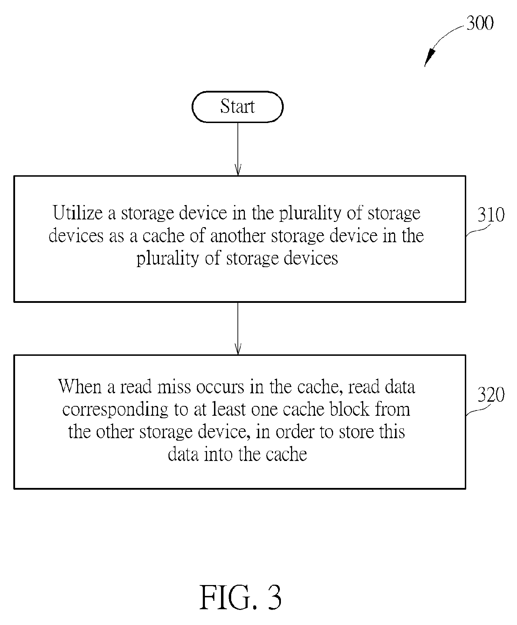

Fig. 3 is a flowchart illustrating a method 300 for performing cache management in a storage system according to an embodiment of the present invention. The method may be applied to the storage system 100 shown in Fig. 1 and the storage system 200 shown in Fig. 2, and more particularly, to the aforementioned control circuit 110. The method is detailed as follows.

In Step 310, the control circuit 110 utilizes a storage device (e.g. a first storage device) in the plurality of storage devices as a cache of another storage device (e.g. a second storage device) in the plurality of storage devices, in which the access speed of the storage device is higher than the access speed of the other storage device, and the cache includes a plurality of cache blocks. For better understanding, the storage system 200 is used as an example. The control circuit 110 utilizes the storage device 120-1 as the cache 222 of the block device 221. This is for illustrative purposes, and not meant to be a limitation of the present invention. The storage device may be the storage device 120-1, and the other storage device may be any other storage device in the N storage devices {120-1, 120-2, ..., 120-N}, and the cache 122 may be an example of the cache mentioned in Step 310.

In Step 320, when a read miss occurs in the cache (i.e. the cache mentioned in Step 310), the control circuit 110 reads data corresponding to at least one cache block from the other storage device, in order to store this data into the cache, in which the data amount corresponding to the read miss is smaller than the data amount of each cache block in the plurality of cache blocks. For example, when the read miss occurs in the cache 222, the control circuit 110 reads the data corresponding to at least one cache block from the block device 221, in order to store this data into the cache 222.

According to this embodiment, when the read miss occurs, the control circuit 110 may read a set of target reading data corresponding to the read miss from the other storage device (e.g. the block device 221), pre-read at least one set of additional data (e.g. one or more sets of additional data) from the other storage device, and utilize the set of target reading data and set of additional data as the data corresponding to the cache block. For example, when the read miss occurs, the control circuit 110 may pre-read the set of additional data from the other storage device for follow-up readings, thereby preventing generating any cache cavity in the cache block of the cache (e.g. the cache 222), in which the data amount corresponding to the read miss may equal the data amount of the set of target reading data. Further, in the other storage device, the data corresponding to the cache block may be successive data. The control circuit 110 may check whether a reading data range corresponding to the read miss conforms to a predetermined cache rule, in which the step (i.e. Step 320) of reading the data corresponding to the cache block from the other storage device to store the data into the cache is performed when the reading data range does not conform to the predetermined cache rule. This prevents generating any cache cavity in the cache block of the cache (e.g. the cache 222). The predetermined cache rule may represent that the reading data range aligns with one or more cache blocks. Hence, when the reading data range aligns with one or more cache blocks, the control circuit 110 may determine that the reading data range conforms to the predetermined cache rule; otherwise, the control circuit 110 may determine that the reading data range does not conform to the predetermined cache rule.

Note that the cache management operations of the control circuit 110 may change according to different situations. According to an embodiment, when another read miss occurs in the cache, the control circuit 110 may read other data corresponding to one or more cache blocks from the other storage device (e.g. the block device 221), in order to store the other data into the cache (e.g. the cache 222), in which the data amount corresponding to the other read miss equals the data amount of the other data. For example, the step of reading the other data from the other storage device (mentioned above) to store the other data into the cache is performed when a reading data range corresponding to the other read miss conforms to the predetermined cache rule. Since the reading data range corresponding to the other read miss of this embodiment originally conforms to the predetermined cache rule (more particularly, aligns to one or more cache blocks), the read command corresponding to the other read miss cannot generate any cache cavity in the cache (e.g. the cache 222).

According to some embodiments, the cache (e.g. the cache 222) mentioned in Step 320 is a read-write cache. The control circuit 110 may trigger a synchronization procedure which is arranged to synchronize one set of newly written data in the cache to the other storage device (e.g. the block device 221). During the synchronization procedure, before synchronizing one set of newly written data in the cache to the other storage device, the control circuit 110 may check whether there is at least one cache cavity in one or more cache blocks in the cache for storing the set of newly written data, in order to selectively fill in the cache cavity. For example, during the synchronization procedure, when it is detected that there is a cache cavity in the one or more cache blocks of the cache for storing the set of newly written data, the control circuit 110 may read data corresponding to the cache cavity from the other storage device, in order to fill in the cache cavity, and then synchronize all data in one or more cache blocks of the cache to the other storage device. In another example, during the synchronization procedure, when it is detected that there is no cache cavity in the one or more cache blocks of the cache for storing the set of newly written data, the control circuit 110 may directly synchronize all data in one or more cache blocks of the cache to the other storage device.

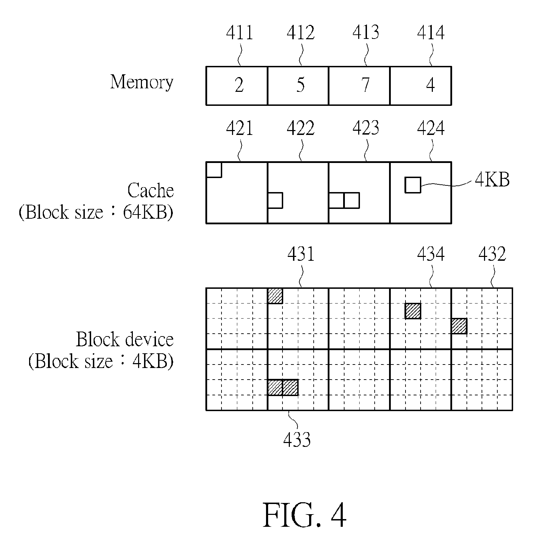

Fig. 4 is a diagram illustrating a target reading data related to the method 300 shown in Fig. 3 according to an embodiment of the present invention. The target reading data can be any of the shaded regions in the block groups 431, 432, 433 and 434 of the block device 221, for example. The smallest access unit in the block device 221 may be 4096 bytes (4 Kilobytes, hereinafter 4KB), which is also the block size of the block device 221. Further, the size of each cache block in the cache 222 may be 65536 bytes (64 Kilobytes, hereinafter 64KB). Similarly, the size of each block group in the block device 221 (e.g. the block groups 431, 432, 433 and 434) may be 64KB, so as to perform cache management. More particularly, the control circuit 110 may store the indexes for the memories 411, 412, 4t13 and 414 of the storage system 200 (such as the values 2, 5, 7 and 4), in order to indicate the mapping relationships between the cache blocks 421, 422, 423 and 424 and the block groups 431, 432, 433 and 434.

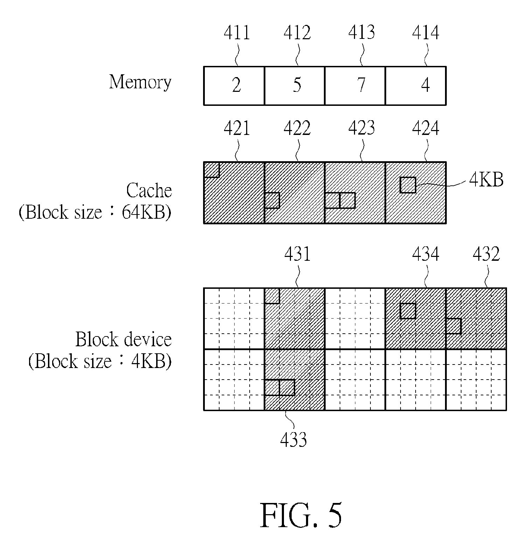

Fig. 5 is a diagram illustrating a control scheme when the method of Fig. 3 is applied to the embodiment of Fig. 4. According to this control scheme, the control circuit 110 may read the set of additional data from the other storage device in advance. In this situation, the squares depicted in the cache blocks 421, 422, 423 and 424 may represent the copies of all data in the block groups 431, 432, 433 and 434 which are represented as shaded squares.

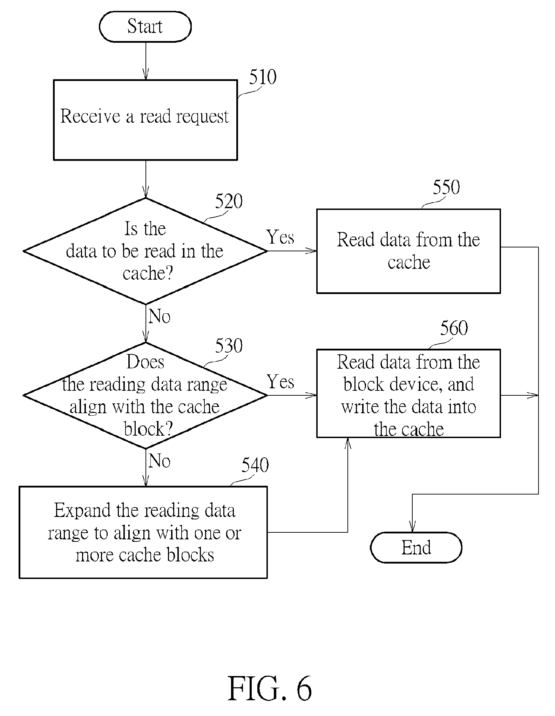

Fig. 6 is a diagram illustrating an operation flow related to the method 300 shown in Fig. 3 according to an embodiment of the present invention.

In step 510, the control circuit 110 receives a read request.

In step 520, the control circuit 110 checks whether the data to be read is in the cache 222. When the data to be read is in the cache 222, go to Step 550; otherwise, go to Step 530.

In step 530, the control circuit 110 checks whether the reading data range aligns with the cache block. For example, the control circuit 110 may perform calculations to determine whether the reading data range (i.e. the location range of the data to be read) aligns with the cache blocks in the cache 222. When the reading data range aligns with the cache blocks in the cache 222, go to Step 560; otherwise, go to Step 540.

In step 540, the control circuit 110 expands the reading data range to align with one or more cache blocks, and uses the expanded reading data range (which is expanded in Step 540) as the newest reading data range.

In step 550, the control circuit 110 reads data from the cache 222.

In step 560, according to the latest reading data range, the control circuit 110 reads data from the block device 221, and writes the data into the cache 222.

If it is determined that the reading data range aligns with the cache block in step 530, the control circuit 110 will directly read from the block device 221 in step 560; otherwise, the control circuit 110 expands the reading range to align with the one or more cache blocks in Step 540, and then pre-reads the data of the aligned cache blocks from the block device in Step 560, and writes data to be read into the cache 222. Hence, it is ensured that a newly written cache block has no cavity.

According to some embodiments, a pre-read range is not limited to a cache block. The control circuit 110 may refer to the access characteristic of the application performed in storage system, in order to pre-read the data corresponding to adjacent cache blocks to the cache 222, to further raise the cache hit rate. The control circuit 110 may check whether a block in a specific block group of the block device 221 and a block in another block group is successive data. When it is detected that the two blocks of the two block groups, respectively, are both successive data, the control circuit 110 may expand the reading data range to include the two block group in step 540. Hence, the control circuit 110 may expand the reading data range of the block device 221 (e.g. the range of the blocks of the data to be read) to the range of the block corresponding to the whole section of successive data.

Taking an EXT4 file system as an example, the minimum read-write unit thereof is 4KB, and the size of the cache block is 64KB. When a cache read miss occurs, if a part of the read request is below 64KB, this part of the read request is read as 64KB and is written back to the cache 222. Through this pre-read mechanism, the cavities in caches can be reduced. If another data of the same cache block is accessed with a shout period, since data is pre-read and stored in the cache 222, the cache hit rate may increase. Hence, the control circuit 110 may often directly read from the cache, and the times of reading the block device 221 may decrease. This improves the overall efficiency of the storage system 200.

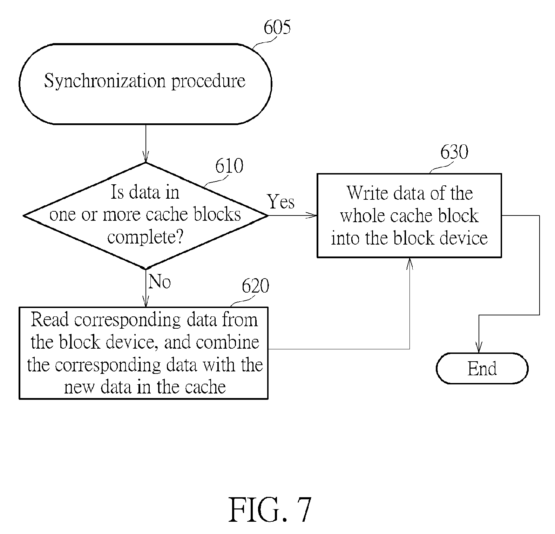

Fig. 7 is a diagram illustrating an operation flow related to the method 300 shown in Fig. 3 according to another embodiment of the present invention, wherein the synchronization procedure 605 may be an example of the aforementioned synchronization procedure. This operation flow is described as follows.

In step 610, the control circuit 110 checks whether data in one or more cache blocks is complete. When new data fully occupies the cache blocks (which means that the data in the cache blocks is complete), go to Step 630; otherwise (which means some data in the cache blocks is lost, i.e. there are cache cavities in the cache blocks), go to Step 620.

In step 620, the control circuit 110 reads corresponding data (the data in the block device corresponding to the cache blocks, wherein this data is not in the cache blocks) from the block device 221, and combines the corresponding data with the new data in the cache 222. Hence, there is no cache cavity in the cache blocks.

In step 630, the control circuit 110 writes data of the whole cache block into the block device 221.

In practice, it is not necessary to apply the above pre-read mechanism for the write request (or write command). Additional hard disk read time may lower the efficiency of writing data. The cache block storing write data may have cache cavities, but these cache cavities will be filled in during the synchronization procedure.

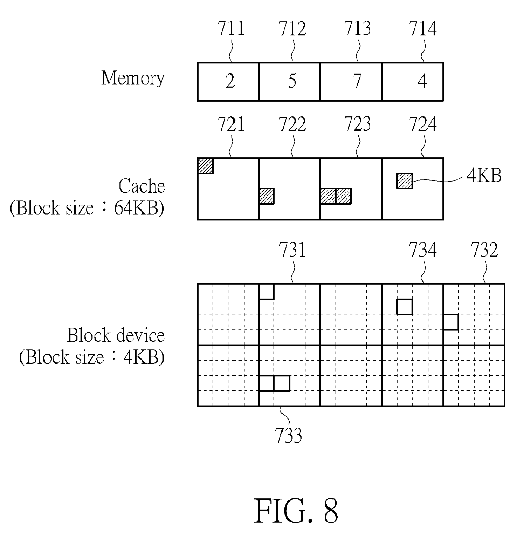

Fig. 8 is a diagram illustrating the target write data related to the method 300 shown in Fig. 3 according to an embodiment of the present invention. The target write data can be any of the shaded squares depicted in the cache blocks 721, 722, 723 and 724 of the cache 222. The size of the smallest access unit of the block device 221 (i.e. a block in the block device 221) may be 4 KB, which is also the block size of the block device 221. Further, the size of each cache block in the cache 222 may be 64KB. Similarly, the size of each block group in the block device 221 (e.g. the block groups 731, 732, 733 and 734) may be 64KB, so as to perform cache management. More particularly, the control circuit 110 may store indexes 711, 712, 713 and 714 in the storage system 200 (such as the values 2, 5, 7 and 4), in order to indicate the mapping relationship between the cache blocks 721, 722, 723 and 724 and the block groups 731, 732, 733 and 734, respectively.

For better understanding of the concept of the invention, assume that a part of the cache management operation of the control circuit 110 may be temporarily disabled/suspended, so that Step 620 is not yet performed by the control circuit 110. In this situation, the unshaded regions in the cache blocks 721, 722, 723 and 724 may represent cache cavity. This is for illustrative purposes, and not meant to be a limitation of the present invention.

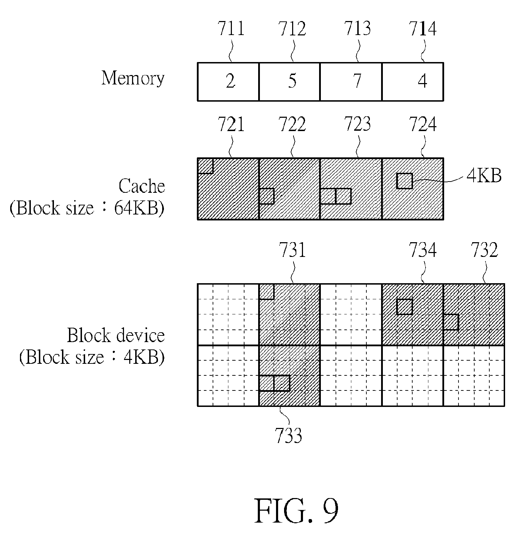

Fig. 9 is a diagram illustrating a control scheme when the method of Fig. 3 is applied to the embodiment of Fig. 8. According to this control scheme, the control circuit 110 may perform operations of step 620. In this situation, the shaded regions in the cache blocks 721, 722, 723 and 724 may represent the data prepared by the control circuit 110 in step 620, for follow-up writings. For example, in step 630, the control circuit 110 may write the combined data into the block groups 731, 732, 733 and 734, wherein the shaded regions in the block groups 731, 732, 733 and 734 may represent the written data.

## Claims

1. A method (300) for performing cache management upon a storage system (100), the storage system (100) comprising a plurality of storage devices, the method (300) **characterized by**:
utilizing a storage device (120-1) of the plurality of storage devices as a cache (122) of another storage device of the plurality of storage devices, wherein an access speed of the storage device (120-1) is higher than an access speed of the other storage device, and the cache (122) includes a plurality of cache blocks; and
when a read miss of the cache (122) occurs, reading data corresponding to at least one cache block from the other storage device to store the data into the cache (122), wherein a data amount corresponding to the read miss is less than a data amount of each cache block of the plurality of cache blocks.

2. The method (300) of claim 1, **characterized in that** the step of reading the data corresponding to the cache block from the other storage device to store the data into the cache (122) further comprises:
when the read miss occurs, reading a set of target reading data corresponding to the read miss from the other storage device, pre-reading at least one set of additional data from the other storage device, and utilizing the set of target reading data and the set of additional data as the data corresponding to the cache block.

3. The method (300) of claim 2, **characterized in that** the step of reading the data corresponding to the cache block from the other storage device to store the data into the cache (122) further comprises:
when the read miss occurs, pre-reading the set of additional data from the other storage device for follow-up readings to thereby prevent generating any cache cavity in the cache block in the cache (122).

4. The method (300) of claim 1, **characterized in that** in the other storage device, the data corresponding to the cache block is successive data; and the method (300) further comprises:
checking whether a reading data range corresponding to the read miss conforms to a predetermined cache rule, wherein the operation of reading the data corresponding to the cache block from the other storage device to store the data into the cache (122) is performed when the reading data range does not conform to the predetermined cache rule, to prevent generating any cache cavity in the cache block of the cache (122).

5. The method (300) of claim 4, **characterized in that** the method (300) further comprises:
when another read miss of the cache (122) occurs, reading other data corresponding to one or more cache blocks from the other storage device to store the other data into the cache (122), wherein a data amount corresponding to the other read miss equals a data amount of the other data.

6. The method (300) of claim 1, **characterized in that** the cache (122) is a read-write cache; and the method (300) further comprises:
triggering a synchronization procedure, wherein the synchronization procedure is arranged to synchronize a set of newly written data in the cache (122) to the other storage device; and
during the synchronization procedure, before synchronizing the set of newly written data in the cache (122) to the other storage device, checking whether there is at least one cache cavity in one or more cache blocks of the cache (122) for storing the set of newly written data, in order to selectively fill the cache cavity.

7. The method (300) of claim 6, **characterized in that** the method (300) further comprises:
during the synchronization procedure, when it is detected that there is at least one cache cavity in the one or more cache blocks for storing the set of newly written data in the cache (122), reading data corresponding to the cache cavity from the other storage device to fill the at least one cache cavity, and then synchronizing all data in the one or more cache blocks of the cache (122) to the other storage device; or
during the synchronization procedure, when it is detected that there is no cache cavity in the one or more cache blocks in the cache (122) for storing the set of newly written data, directly synchronizing all data in the one or more cache blocks of the cache (122) to the other storage device.

8. An apparatus for performing cache management upon a storage system (100), the apparatus comprising at least a portion of the storage system (100), the storage system (100) comprising a plurality of storage devices, the apparatus **characterized by**:
a storage device (120-1) of the plurality of storage devices, arranged to store information, wherein an access speed of the storage device is higher than an access speed of another storage device of the plurality of storage devices; and
a control circuit, configured in the storage system (100) and coupled to the plurality of storage devices, the control circuit arranged to control operations of the storage system (100) and utilizing the storage device as a cache (122) of the other storage device, wherein the cache (122) comprises a plurality of cache blocks, and when a read miss of the cache (122) occurs, the control circuit reads data corresponding to at least one cache block from the other storage device, to store the data into the cache (122), wherein a data amount corresponding to the read miss is less than a data amount of each cache block of the plurality of cache blocks.

9. The apparatus of claim 8, **characterized in that** when the read miss occurs, the control circuit reads a set of target reading data corresponding to the read miss from the other storage device, pre-reads at least one set of additional data from the other storage device, and utilizes the set of target reading data and the set of additional data as the data corresponding to the cache block.

10. The apparatus of claim 8, **characterized in that** in the other storage device, the data corresponding to the cache block is successive data; and the control circuit checks whether a reading data range corresponding to the read miss conforms to a predetermined cache rule, wherein the operation of reading the data corresponding to the cache block from the other storage device to store the data into the cache (122) is performed when the reading data range does not conform to the predetermined cache rule, to prevent generating any cache cavity in the cache block of the cache (122).

11. The apparatus of claim 10, **characterized in that** when another read miss of the cache (122) occurs, the control circuit reads other data corresponding to one or more cache blocks from the other storage device to store the other data into the cache (122), wherein a data amount corresponding to the other read miss equals a data amount of the other data.

12. The apparatus of claim 8, **characterized in that** the cache (122) is a read-write cache, and the control circuit triggers a synchronization procedure, wherein the synchronization procedure is arranged to synchronize a set of newly written data in the cache (122) to the other storage device; and during the synchronization procedure, before the set of newly written data in the cache (122) is synchronized to the other storage device, the control circuit checks whether there is at least one cache cavity in one or more cache blocks of the cache (122) for storing the set of newly written data, in order to selectively fill the cache cavity.

13. The apparatus of claim 12, **characterized in that** during the synchronization procedure, when it is detected that there is at least one cache cavity in the one or more cache blocks for storing the set of newly written data in the cache (122), the control circuit reads data corresponding to the cache cavity from the other storage device to fill the cache cavity, and then synchronizes all data in the one or more cache blocks of the cache (122) to the other storage device; or during the synchronization procedure, when it is detected that there is no cache cavity in the one or more cache blocks in the cache (122) for storing the set of newly written data, the control circuit directly synchronizes all data in the one or more cache blocks of the cache (122) to the other storage device.

14. The method (300) of claim 2 or the apparatus of claim 9, **characterized in that** the data amount corresponding to the read miss equals a data amount of the set of target reading data.

15. The method (300) of claim 6 or the apparatus of claim 12, **characterized in that** the operation of reading the other data from the other storage device to store the other data into the cache (122) is performed when a reading data range corresponding to the other read miss conforms to the predetermined cache rule.
